# EUROPEAN PATENT SPECIFICATION

(11) **EP 3 506 532 B1**
(45) Date of publication and mention of the grant of the patent: **17.04.2024**
(21) Application number: 17210761.7
(22) Date of filing: 27.12.2017
(51) Int. Cl.: H04B 10/572, H04J 14/02, H04Q 11/00

(54) **OPTICAL COMMUNICATION SYSTEM AND OPTICAL COMMUNICATION METHOD**
OPTISCHES KOMMUNIKATIONSSYSTEM UND OPTISCHES KOMMUNIKATIONSVERFAHREN
SYSTÈME DE COMMUNICATION OPTIQUE ET PROCÉDÉ DE COMMUNICATION OPTIQUE

(43) Date of publication of application: 03.07.2019
(73) Proprietor: Vestel Elektronik Sanayi ve Ticaret A.S., 45030 Manisa (TR)
(72) Inventor: YILMAZLAR, Ismail, 45030 Manisa (TR)
(74) Representative: Kehl, Ascherl, Liebhoff & Ettmayr Patentanwälte Partnerschaft mbB

(56) References cited:
- EP-A1- 1 137 204
- WO-A1-2011/159212

## Description

### TECHNICAL FIELD

The invention relates to and optical communication system and to a respective optical communication method.

### BACKGROUND

Although applicable to any optical communication system, the present invention will mainly be described in conjunction with wavelength-division multiplexing or WDM systems.

WDM refers to an optical communication technology, where a number of optical carrier signals with different wavelengths are multiplexed onto a single optical fiber.

A WDM system usually comprises a multiplexer at the transmitter side. That transmitter joins several signals with different wavelengths together for transmission over a single fiber. A demultiplexer at the receiver then splits the single signals apart. Usually, the signals of the different wavelengths will each pertain to a specific link. This means that the starting point or signal source of the respective link will provide a modulated source signal with the respective wavelength. The multiplexer joins multiple such source signals and transmits them via a single fiber to the demultiplexer at the receiver side. At the receiver side, the single source signals are separated and directly provided to the receiving end of the respective link.

This means that the signal path is automatically determined by the wavelength of the source signal.

Such a WDM system requires a single signal source for each one of the source signals that generates a signal with the respective wavelength. Further, the multiplexer on the receiver side is also required. Common WDM systems are therefore complex, hard to maintain and costly.

Document EP 1 137 204A1 discloses a multi-wavelength light source device for testing optical routers. Document WO 2011 / 159 212 A1 discloses a method for changing the mode of a laser source for a single communication link without data loss.

Accordingly, there is a need for providing an improved WDM system.

### SUMMARY OF THE INVENTION

The present invention provides an optical communication system with the features of claim 1 and an optical communication method with the features of claim 6.

The present invention is based on the finding that a single laser diode may generate laser light at different wavelengths depending on the level of a DC current that is provided to the laser diode.

The present invention uses this finding to provide an optical communication system with a single signal source, i.e. the laser diode, especially a so called multi-mode laser diode, on the transmitter side of a communication link.

The laser diode will be driven by the control unit to work in different modes. A mode refers to the laser diode emitting laser light of a predetermined wavelength. Usually laser diodes emit coherent light at a single wavelength. The wavelength, i.e. the mode, of this light may e.g. be determined by the level of the DC current that is provided to the laser diode.

This means that the control unit may adapt the level of DC current that is provided to the laser diode to select one of a plurality of modes that the laser diode is capable of creating laser light at.

The present invention allows serving multiple data links with a single laser diode on the source or transmitter side by cyclically switching or by cycling through the modes of the laser diode on the transmitter side.

The control unit receives the source data for a plurality of different communication links. Every communication link is assigned one of the modes of the laser diode or one specific wavelength of laser light. Therefore, the control unit modulates the light of the laser diode in every mode according to the source data that pertains to that specific mode. This means that the source data of the different communication links will be interleaved as well as the laser light of the different modes of the laser diode.

It is understood, that the number of communication links may be as high as the number of possible modes of the laser diode. This means that a laser diode with e.g. five modes supports a total of five communication links.

Since laser light at different wavelengths is generated with a single diode, with the present invention no multiplexer is required on the transmitter side to serve a plurality of communication links.

Therefore, the present invention allows providing a drastically simplified arrangement for optical WDM communication networks.

Further embodiments of the present invention are subject of the further subclaims and of the following description, referring to the drawings.

In an embodiment, the optical communication system comprises on a receiver side an optical demultiplexer that is coupled to the optical fiber on the receiver side, wherein the demultiplexer is configured to provide incoming light of different predetermined wavelengths each to a respective receiver.

As already explained above, the laser diode on the transmitter side is driven to generate laser light at different modes or wavelengths. On the receiver side, these different modes or wavelengths are easily separated by the optical demultiplexer.

The optical demultiplexer separates the incoming light by wavelengths. It is understood, that the optical demultiplexer may be adapted to the wavelengths or modes of the laser diode on the transmitter side. Therefore, the optical demultiplexer will forward the incoming light of the different modes each to a specific destination.

The transmitter side (laser diode) of the present invention may therefore be easily combined with the receiver side (demultiplexer) of a WDM system that is configured to provide a respective number of communication links.

In another embodiment, the optical demultiplexer comprises an output port for every mode that is used by the control unit to transmit the source data.

The optical demultiplexer separates the incoming light by wavelength and the laser diode is capable of generating laser light at specific wavelengths or modes. The demultiplexer may therefore be adapted to the exact number of modes or wavelengths that are used by the control unit and provide a respective number of output ports.

This means that on the output side the optical demultiplexer provides the laser light of the single modes or wavelengths on different ports that may be coupled with the respective receivers.

In a further embodiment, the control unit may comprise a data buffer configured to buffer the incoming source data for the communication links.

As explained above, the laser diode is operated in one specifically selected mode at every point in time. In addition, every mode is used to exclusively transmit data of one single communication link. Therefore the data buffer in the control unit may store or buffer the data of all communication links until the respective mode is selected and data of a communication link may be transmitted.

in another embodiment, the control unit may comprise a configurable current source and a timer, wherein the control unit may be configured to cyclically reconfigure based on an output of the timer the current source to output a DC current that selects a respective mode in the laser diode.

The mode a laser diode operates at or uses may be selected by the level of the DC current that is provided to the laser diode. The configurable current source therefore is a very simple and effective way to reconfigure the laser diode to operate at a specific mode or use a specific mode.

The timer allows the control unit, e.g. a processing unit of the control unit, to determine when the mode of the laser diode should be changed such that data of another communication link may be transmitted.

It is understood, that the control unit may cyclically change the mode of the laser diode at a predetermined rate, i.e. every communication link will be assigned the same amount of time. This means that with two communication links every communication link will be assigned 50% of the transmission time, with three communication links every communication link will be assigned 33,33% of the communication time and so on.

The control unit may however also assign different proportions of the available time to different communication links. In a two communication link system for example one communication link may be assigned with more than 50% of the transmission time, e.g. 80%, and the other communication link may be assigned with less than 50% of the transmission time, e.g. 20%. This allows prioritizing different links.

The priorities of the single communication links or the share of the available transmission time may e.g. be predetermined or configurable in the control unit.

In another embodiment, the control unit may be configured to retrieve the source data from the data buffer that corresponds to a momentarily selected mode of the laser diode and to modulate a control signal for the laser diode according to the retrieved source data.

To transmit the source data of a specific communication link, the control unit will retrieve the respective data from the data buffer and modulate the control signal for the laser diode accordingly. The laser diode will then emit modulated laser light at the selected mode that represents the source data to be transmitted.

It is understood, that the control unit may add further signal components to the source data, like e.g. control and error correction information, like parity bits or the like.

In an embodiment, the control unit may be configured to analyze for every communication link the amount of source data in the data buffer and to prioritize the communication links according to the amount of source data in the data buffer.

The data buffer holds the source data for all communication links. It is understood, that the data rate at which the source data arrives at the control unit may vary for the different communication links. This means that the data buffer may hold different amounts of source data for the different communication links. Consequently, the control unit may determine the urgency or the required bandwidth for the single communication links based on the amount of source data in the data buffer for the single communication links.

After determining the amount of source data for the single communication links, the control unit may dynamically prioritize the communication links. This means that the communication links with a high amount of source data in the data buffer will be assigned a high share of the available transmission time and that the laser source will be operated in the respective mode for the assigned duration.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an optical communication system according to the present invention;
Fig. 2 shows a block diagram of an embodiment of an optical communication system according to the present invention;
Fig. 3 shows a flow diagram of an embodiment of an optical communication method according to the present invention; and
Fig. 4 shows a diagram of different modes of a laser diode for use with an embodiment of an optical communication system according to the present invention.

In the figures like reference signs denote like elements unless stated otherwise.

### DETAILED DESCRIPTION OF THE DRAWINGS

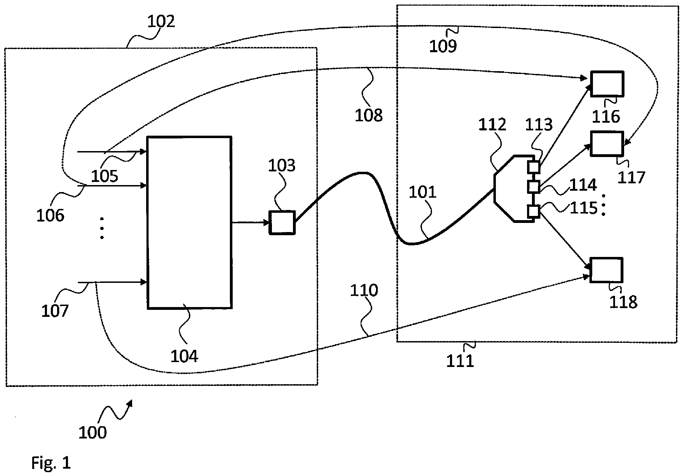

Fig. 1 shows a block diagram of an optical communication system 100. The optical communication system 100 comprises on a transmitter side 102 a laser diode 103 that is coupled to an optical fiber 101. The optical communication system 100 further comprises a control unit 104 that is coupled to the laser diode 103.

On the receiver side 111 the optical communication system 100 comprises an optical demultiplexer 112 with exemplary three output ports 113, 114, 115. Every output port is coupled to a receiver 116, 117, 118. It is understood, that although three output ports 113, 114, 115 and three receivers 116, 117, 118 are shown, the optical demultiplexer 112 may comprise any number of output ports to serve any number of receivers.

The control unit 104 receives source data 105, 106, 107 for communication links 108, 109, 110. A communication link 108, 109, 110 refers to a predetermined signal path starting form a sender (not shown) to one of the receivers 116, 117, 118. In WDM systems, the signal paths, i.e. the communication links 108, 109, 110, are usually predetermined and refer to a connection between a sender and a receiver 116, 117, 118. This means that data from a specific sender will always travel the same path and be delivered to the same receiver 116, 117, 118. It is understood, that real-time or in-application reconfiguration of the communication links 108, 109, 110 may be possible.

To serve the three communication links 108, 109, 110, the control unit 104 controls the laser diode 103 to cyclically switch the mode. The term mode refers to one of the optical modes of the laser diode 103, i.e. a wavelength at which the laser diode 103 emits laser light. The control unit 104 may e.g. control a DC current that is provided to the laser diode 103 to select one of the possible modes.

Further, the control unit 104 modulates in every mode laser light that is generated by the laser diode 103 based on the respective source data 105, 106, 107 for the respective communication link 108, 109, 110, 208, 209, 210 that corresponds to the respective mode.

The control unit 104 may e.g. select a first mode of the laser diode 103 for transmitting the source data 105, a second mode of the laser diode 103 for transmitting the source data 106, and a third mode of the laser diode 103 for transmitting the source data 107. This means that source data 105 will be transmitted with light of another wavelength than source data 106 and with light of another wavelength than source data 107. This means that the laser diode 103 needs to provide at least as many modes as the number of communication links 108, 109, 110 that should be served.

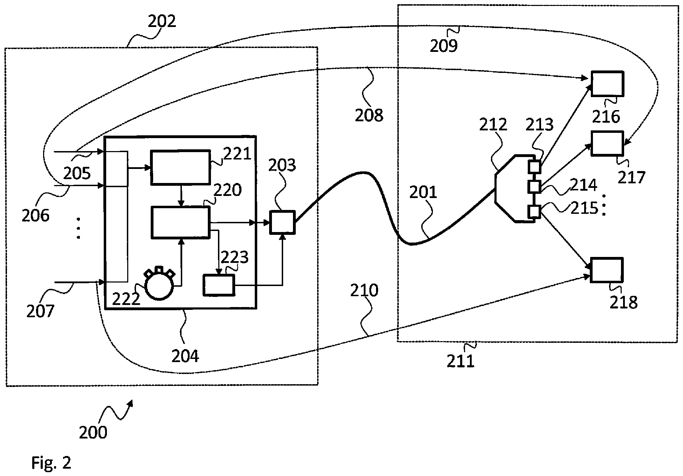

Fig. 2 shows a block diagram of another optical communication system 200. The optical communication system 200 is based on the optical communication system 100. The optical communication system 200 therefore also comprises on a transmitter side 202 a laser diode 203 that is coupled to an optical fiber 201. The optical communication system 200 further comprises a control unit 204 that is coupled to the laser diode 203. On the receiver side 211 the optical communication system 200 comprises an optical demultiplexer 212 with exemplary three output ports 213, 214, 215. Every output port is coupled to a receiver 216, 217, 218. Again, it is understood, that although three output ports 213, 214, 215 and three receivers 216, 217, 218 are shown, the optical demultiplexer 212 may comprise any number of output ports to serve any number of receivers.

As in the optical communication system 100, the control unit 204 receives source data 205, 206, 207 for transmission to the respective receivers 216, 217, 218 via laser light that is generated by the laser diode 203.

In addition to the above described elements, the control unit 204 comprises a processing element 220 that is coupled to a data buffer 221, to a timer 222 and to a configurable current source 223.

The data buffer 221 receives the incoming source data 205, 206, 207 and stores or buffers the incoming source data 205, 206, 207 for processing by the processing element 220. The timer 222 provides a time base to the processing element 220, e.g. for determining when to switch the laser diode 203 into another mode. The configurable current source 223 provides a DC current to the laser diode 203 that selects a specific mode in the laser diode 203.

The control unit 104 may cyclically reconfigure, e.g. based on an output of the timer 222, the current source to output a DC current that selects a respective mode in the laser diode 203 and then modulate the control signal for the laser diode 203 according to the respective source data 205, 206, 207. It is understood, that in an embodiment, the configurable current source 223 may also perform a modulation of the current that is supplied to the laser diode 203 according to the respective source data 205, 206, 207.

As explained, the control unit 204 may always retrieve the source data 205, 206, 207 from the data buffer 221 that corresponds to a momentarily selected mode of the laser diode 203 and may modulate a control signal for the laser diode 203 according to the retrieved source data 205, 206, 207. However, in an embodiment, the control unit 204 may also analyze for every communication link 208, 209, 210 the amount of source data 205, 206, 207 in the data buffer 221 and may prioritize the communication links 208, 209, 210 according to the amount of source data 205, 206, 207 in the data buffer 221.

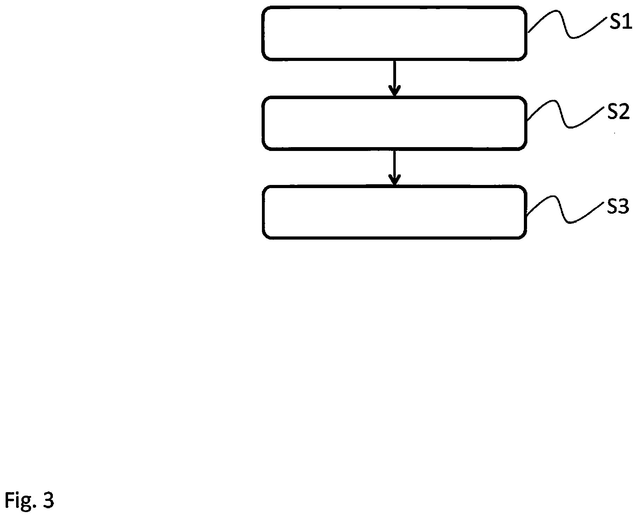

For sake of clarity in the following description of the method based Fig. 3 the reference signs used in the description of Figs. 1, 2 and 4 will be maintained.

Fig. 3 shows a flow diagram of an optical communication method for communicating data from a transmitter side 102, 202 to a receiver side 111, 211 via an optical fiber 101, 201.

The optical communication method comprises receiving S1 on the transmitter side 102, 202 source data 105, 106, 107, 205, 206, 207 for a plurality of communication links 108, 109, 110, 208, 209, 210, controlling S2 on the transmitter side 102, 202 a laser diode 103, 203 to cyclically switch the mode M1, M2, M3, M4, M5 of the laser diode 103, 203, and modulating S3 on the transmitter side 102, 202 in every mode M1, M2, M3, M4, M5 laser light that is generated by the laser diode 103, 203 based on source data 105, 106, 107, 205, 206, 207 for one of the communication links 108, 109, 110, 208, 209, 210 that corresponds to the respective mode M1, M2, M3, M4, M5.

The optical communication method may comprise on the receiver side 111, 211 demultiplexing incoming light of different predetermined wavelengths and providing the incoming light of different predetermined wavelengths each to a respective receiver 116, 117, 118, 216, 217, 218. The light of different predetermined wavelengths may e.g. be provided to each one of the receivers 116, 117, 118, 216, 217, 218 via a respective output port 113, 114, 115, 213, 214, 215 of an optical demultiplexer 112, 212.

On the transmitter side 102, 202 the optical communication method may comprise buffering the incoming source data 105, 106, 107, 205, 206, 207 for the communication links 108, 109, 110, 208, 209, 210 in a data buffer 221. Further, the optical communication method may comprise on the transmitter side 102, 202 cyclically reconfiguring based on an output of a timer 222 a current source for the laser diode 103, 203 to output a DC current that selects a respective mode M1, M2, M3, M4, M5 in the laser diode 103, 203. In addition or as alternative, on the transmitter side 102, 202 the optical communication method may comprise retrieving the source data 105, 106, 107, 205, 206, 207 from the data buffer 221 that corresponds to a momentarily selected mode M1, M2, M3, M4, M5 of the laser diode 103, 203 and modulating a control signal for the laser diode 103, 203 according to the retrieved source data 105, 106, 107, 205, 206, 207.

The optical communication method may also comprise analyzing for every communication link 108, 109, 110, 208, 209, 210 the amount of source data 105, 106, 107, 205, 206, 207 in the data buffer 221 and prioritizing the communication links 108, 109, 110, 208, 209, 210 according to the amount of source data 105, 106, 107, 205, 206, 207 in the data buffer 221.

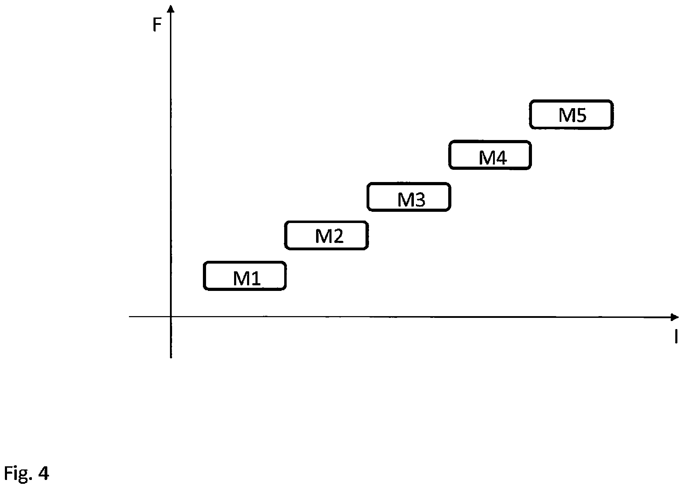

Fig. 4 shows a diagram of different modes M1, M2, M3, M4, M5 of a laser diode for use with an embodiment of an optical communication system according to the present invention.

In the diagram of Fig. 4 five modes M1, M2, M3, M4, M5 are shown. It can be seen that the mode M1, M2, M3, M4, M5 and therefore the frequency of the light that is emitted by the laser diode depends on the current I that is provide to the laser diode. It is understood, that no explicit values are given for I and F, since these may strongly vary depending on the selected laser diode and other external parameters, like e.g. temperature.

It can be seen, that it is possible to select different modes M1, M2, M3, M4, M5 of a laser diode by configuring the current to the laser diode respectively.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an optical communication system 100, 200 for communicating data via an optical fiber 101, 201, the optical communication system 100, 200 comprising a laser diode 103, 203 that is coupled to the optical fiber 101, 201 on the transmitter side 102, 202, and a control unit 104, 204 that is coupled to the laser diode 103, 203 and that is configured to receive source data 105, 106, 107, 205, 206, 207 for a plurality of communication links 108, 109, 110, 208, 209, 210, wherein the control unit 104, 204 is configured to control the laser diode 103, 203 to cyclically switch the mode M1, M2, M3, M4, M5 and to modulate in every mode M1, M2, M3, M4, M5 laser light that is generated by the laser diode 103, 203 based on source data 105, 106, 107, 205, 206, 207 for a communication link 108, 109, 110, 208, 209, 210 that corresponds to the respective mode M1, M2, M3, M4, M5. In addition, the present invention provides an optical communication method.

### List of reference signs

- 100, 200: optical communication system
- 101, 201: optical fiber
- 102, 202: transmitter side
- 103, 203: laser diode
- 104, 204: control unit
- 105, 106, 107, 205, 206, 207: source data
- 108, 109, 110, 208, 209, 210: communication link

- 111, 211: receiver side
- 112, 212: optical demultiplexer
- 113, 114, 115, 213, 214, 215: output port
- 116, 117, 118, 216, 217, 218: receiver

- 220: processing element
- 221: data buffer
- 222: timer
- 223: configurable current source

- M1, M2, M3, M4, M5: mode

- S1, S2, S3: method steps

## Claims

1. Optical communication system (100, 200) for communicating data via an optical fiber (101, 201), the optical communication system (100, 200) comprising:
a laser diode (103, 203) that is coupled to the optical fiber (101, 201) on the transmitter side (102, 202),
a control unit (104, 204) that is coupled to the laser diode (103, 203) and that is configured to receive source data (105, 106, 107, 205, 206, 207) for a plurality of communication links (108, 109, 110, 208, 209, 210),
**characterized in that** the control unit (104, 204) is configured to control the laser diode (103, 203) to cyclically switch a mode which refers to the light of a predetermined wavelength (M1, M2, M3, M4, M5) and to modulate in every mode (M1, M2, M3, M4, M5) laser light that is generated by the laser diode (103, 203) based on source data (105, 106, 107, 205, 206, 207) for a communication link (108, 109, 110, 208, 209, 210) that corresponds to the respective mode (M1, M2, M3, M4, M5); and that
an optical demultiplexer (112, 212) on a receiver side (111, 211) is coupled to the optical fiber (101, 201) on the receiver side (111, 211), wherein the demultiplexer is configured to provide incoming light of different predetermined wavelengths each to a respective receiver (116, 117, 118, 216, 217, 218),
wherein the optical demultiplexer (112, 212) comprises an output port (113, 114, 115, 213, 214, 215) for every mode (M1, M2, M3, M4, M5) that is used by the control unit (104, 204) to transmit the source data (105, 106, 107, 205, 206, 207).

2. Optical communication system (100, 200) according to claim 1, wherein the control unit (104, 204) comprises a data buffer (221) configured to buffer the incoming source data (105, 106, 107, 205, 206, 207) for the communication links (108, 109, 110, 208, 209, 210).

3. Optical communication system (100, 200) according to any one of the preceding claims, wherein the control unit (104, 204) comprises a configurable current source (223) and a timer (222), wherein the control unit (104, 204) is configured to cyclically reconfigure based on an output of the timer (222) the current source to output a DC current that selects a respective mode (M1, M2, M3, M4, M5) in the laser diode (103, 203).

4. Optical communication system (100, 200) according to claims 2 and 3, wherein the control unit (104, 204) is configured to retrieve the source data (105, 106, 107, 205, 206, 207) from the data buffer (221) that corresponds to a momentarily selected mode (M1, M2, M3, M4, M5) of the laser diode (103, 203) and to modulate a control signal for the laser diode (103, 203) according to the retrieved source data (105, 106, 107, 205, 206, 207).

5. Optical communication system (100, 200) according to any one of the preceding claims 2 to 4, wherein the control unit (104, 204) is configured to analyze for every communication link (108, 109, 110, 208, 209, 210) the amount of source data (105, 106, 107, 205, 206, 207) in the data buffer (221) and to prioritize the communication links (108, 109, 110, 208, 209, 210) according to the amount of source data (105, 106, 107, 205, 206, 207) in the data buffer (221).

6. Optical communication method for communicating data from a transmitter side (102, 202) to a receiver side (111, 211) via an optical fiber (101, 201), the optical communication method comprising:
receiving (S1) on the transmitter side (102, 202) source data (105, 106, 107, 205, 206, 207) for a plurality of communication links (108, 109, 110, 208, 209, 210), controlling (S2) on the transmitter side (102, 202) a laser diode (103, 203) to
cyclically switch a mode which refers to the light of a predetermined wavelength (M1, M2, M3, M4, M5) of the laser diode (103, 203), **characterized by** modulating (S3) on the transmitter side (102, 202) in every mode (M1, M2, M3, M4, M5) laser light that is generated by the laser diode (103, 203) based on source data (105, 106, 107, 205, 206, 207) for one of the communication links (108, 109, 110, 208, 209, 210) that corresponds to the respective mode (M1, M2, M3, M4, M5); and
on the receiver side (111, 211) demultiplexing incoming light of different predetermined wavelengths and providing the incoming light of different predetermined wavelengths each to a respective receiver (116, 117, 118, 216, 217, 218), wherein the light of different predetermined wavelengths is provided to each one of the receivers (116, 117, 118, 216, 217, 218) via a respective output port (113, 114, 115, 213, 214, 215) of an optical demultiplexer (112, 212).

7. Optical communication method according to claim 6, comprising on the transmitter side (102, 202) buffering the incoming source data (105, 106, 107, 205, 206, 207) for the communication links (108, 109, 110, 208, 209, 210) in a data buffer (221).

8. Optical communication method according to any one of the preceding claims 6 and 7, comprising on the transmitter side (102, 202) cyclically reconfiguring based on an output of a timer (222) a current source for the laser diode (103, 203) to output a DC current that selects a respective mode (M1, M2, M3, M4, M5) in the laser diode (103,203).

9. Optical communication method according to claims 7 and 8, comprising on the transmitter side (102, 202) retrieving the source data (105, 106, 107, 205, 206, 207) from the data buffer (221) that corresponds to a momentarily selected mode (M1, M2, M3, M4, M5) of the laser diode (103, 203) and modulating a control signal for the laser diode (103, 203) according to the retrieved source data (105, 106, 107, 205, 206, 207).

10. Optical communication method according to any one of the preceding claims 7 to 9, comprising analyzing for every communication link (108, 109, 110, 208, 209, 210) the amount of source data (105, 106, 107, 205, 206, 207) in the data buffer (221) and prioritizing the communication links (108, 109, 110, 208, 209, 210) according to the amount of source data (105, 106, 107, 205, 206, 207) in the data buffer (221).

## Patentansprüche

1. Optisches Kommunikationssystem (100, 200) zur Übertragung von Daten über eine optische Faser (101, 201), wobei das optische Kommunikationssystem (100, 200) aufweist:
eine Laserdiode (103, 203), die auf der Senderseite (102, 202) mit der optischen Faser (101, 201) gekoppelt ist,
eine Steuereinheit (104, 204), die mit der Laserdiode (103, 203) gekoppelt und so konfiguriert ist, dass sie Quelldaten (105, 106, 107, 205, 206, 207) für eine Vielzahl von Kommunikationsverbindungen (108, 109, 110, 208, 209, 210) empfängt,
**dadurch gekennzeichnet, dass** die Steuereinheit (104, 204) so konfiguriert ist, dass sie die Laserdiode (103, 203) so steuert, dass sie zyklisch einen Modus (M1, M2, M3, M4, M5) schaltet, der sich auf das Licht einer vorbestimmten Wellenlänge bezieht, und dass sie in jedem Modus (M1, M2, M3, M4, M5) Laserlicht zu modulieren, das von der Laserdiode (103, 203) auf der Grundlage von Quelldaten (105, 106, 107, 205, 206, 207) für eine Kommunikationsverbindung (108, 109, 110, 208, 209, 210) erzeugt wird, die dem jeweiligen Modus (M1, M2, M3, M4, M5) entspricht;
und dass
ein optischer Demultiplexer (112, 212) auf einer Empfängerseite (111, 211) mit der optischen Faser (101, 201) auf der Empfängerseite (111, 211) gekoppelt ist, wobei der Demultiplexer so konfiguriert ist, dass er ankommendes Licht verschiedener vorbestimmter Wellenlängen jeweils an einen entsprechenden Empfänger (116, 117, 118, 216, 217, 218) liefert,
wobei der optische Demultiplexer (112, 212) für jeden Modus (M1, M2, M3, M4, M5) einen Ausgangsanschluss (113, 114, 115, 213, 214, 215) aufweist, der von der Steuereinheit (104, 204) zur Übertragung der Quelldaten (105, 106, 107, 205, 206, 207) verwendet wird.

2. Optisches Kommunikationssystem (100, 200) nach Anspruch 1, wobei die Steuereinheit (104, 204) einen Datenpuffer (221) aufweist, der so konfiguriert ist, dass er die eingehenden Quelldaten (105, 106, 107, 205, 206, 207) für die Kommunikationsverbindungen (108, 109, 110, 208, 209, 210) puffert.

3. Optisches Kommunikationssystem (100, 200) nach einem der vorhergehenden Ansprüche, wobei die Steuereinheit (104, 204) eine konfigurierbare Stromquelle (223) und einen Zeitgeber (222) aufweist, wobei die Steuereinheit (104, 204) so konfiguriert ist, dass sie auf der Grundlage einer Ausgabe des Zeitgebers (222) die Stromquelle zyklisch rekonfiguriert, um einen Gleichstrom auszugeben, der einen jeweiligen Modus (M1, M2, M3, M4, M5) in der Laserdiode (103, 203) auswählt.

4. Optisches Kommunikationssystem (100, 200) nach den Ansprüchen 2 und 3, wobei die Steuereinheit (104, 204) so konfiguriert ist, dass sie die Quelldaten (105, 106, 107, 205, 206, 207) aus dem Datenpuffer (221) abruft, die einem momentan ausgewählten Modus (M1, M2, M3, M4, M5) der Laserdiode (103, 203) entsprechen, und dass sie ein Steuersignal für die Laserdiode (103, 203) gemäß den abgerufenen Quelldaten (105, 106, 107, 205, 206, 207) moduliert.

5. Optisches Kommunikationssystem (100, 200) nach einem der vorhergehenden Ansprüche 2 bis 4, wobei die Steuereinheit (104, 204) so konfiguriert ist, dass sie für jede Kommunikationsverbindung (108, 109, 110, 208, 209, 210) die Menge der Quelldaten (105, 106, 107, 205, 206, 207) im Datenpuffer (221) analysiert und die Kommunikationsverbindungen (108, 109, 110, 208, 209, 210) entsprechend der Menge der Quelldaten (105, 106, 107, 205, 206, 207) im Datenpuffer (221) priorisiert.

6. Optisches Kommunikationsverfahren zum Übertragen von Daten von einer Senderseite (102, 202) zu einer Empfängerseite (111, 211) über eine optische Faser (101, 201), wobei das optische Kommunikationsverfahren folgendes aufweist:
Empfangen (S1) auf der Senderseite (102, 202) von Quelldaten (105, 106, 107, 205, 206, 207) für eine Vielzahl von Kommunikationsverbindungen (108, 109, 110, 208, 209, 210),
Steuern (S2) einer Laserdiode (103, 203) auf der Senderseite (102, 202) zum zyklischen Schalten eines Modus (M1, M2, M3, M4, M5), der sich auf das Licht einer vorbestimmten Wellenlänge der Laserdiode (103, 203) bezieht,
**gekennzeichnet durch**
Modulieren (S3) auf der Senderseite (102, 202) in jedem Modus (M1, M2, M3, M4, M5) Laserlicht, das von der Laserdiode (103, 203) erzeugt wird, basierend auf Quelldaten (105, 106, 107, 205, 206, 207) für eine der Kommunikationsverbindungen (108, 109, 110, 208, 209, 210), die dem jeweiligen Modus (M1, M2, M3, M4, M5) entspricht;
und
auf der Empfängerseite (111, 211) das Demultiplexen von ankommendem Licht verschiedener vorbestimmter Wellenlängen und das Bereitstellen des ankommenden Lichts verschiedener vorbestimmter Wellenlängen jeweils an einen jeweiligen Empfänger (116, 117, 118, 216, 217, 218), wobei das Licht verschiedener vorbestimmter Wellenlängen an jeden der Empfänger (116, 117, 118, 216, 217, 218) über einen jeweiligen Ausgangsanschluss (113, 114, 115, 213, 214, 215) eines optischen Demultiplexers (112, 212) bereitgestellt wird.

7. Optisches Kommunikationsverfahren nach Anspruch 6, das auf der Senderseite (102, 202) das Puffern der eingehenden Quelldaten (105, 106, 107, 205, 206, 207) für die Kommunikationsverbindungen (108, 109, 110, 208, 209, 210) in einem Datenpuffer (221) aufweist.

8. Optisches Kommunikationsverfahren nach einem der vorhergehenden Ansprüche 6 und 7, das auf der Senderseite (102, 202) das zyklische Rekonfigurieren einer Stromquelle für die Laserdiode (103, 203) auf der Grundlage einer Ausgabe eines Zeitgebers (222) aufweist, um einen Gleichstrom auszugeben, der einen jeweiligen Modus (M1, M2, M3, M4, M5) in der Laserdiode (103, 203) auswählt.

9. Optisches Kommunikationsverfahren nach den Ansprüchen 7 und 8, das auf der Senderseite (102, 202) das Abrufen der Quelldaten (105, 106, 107, 205, 206, 207) aus dem Datenpuffer (221), die einem momentan ausgewählten Modus (M1, M2, M3, M4, M5) der Laserdiode (103, 203) entsprechen, und das Modulieren eines Steuersignals für die Laserdiode (103, 203) gemäß den abgerufenen Quelldaten (105, 106, 107, 205, 206, 207) aufweist.

10. Optisches Kommunikationsverfahren nach einem der vorhergehenden Ansprüche 7 bis 9, das für jede Kommunikationsverbindung (108, 109, 110, 208, 209, 210) die Menge an Quelldaten (105, 106, 107, 205, 206, 207) im Datenpuffer (221) aufweist und die Kommunikationsverbindungen (108, 109, 110, 208, 209, 210) entsprechend der Menge an Quelldaten (105, 106, 107, 205, 206, 207) im Datenpuffer (221) priorisiert.

## Revendications

1. Système de communication optique (100, 200) pour communiquer des données via une fibre optique (101, 201), le système de communication optique (100, 200) comprenant :
une diode laser (103, 203) qui est couplée à la fibre optique (101, 201) du côté de l'émetteur (102, 202),
une unité de commande (104, 204) couplée à la diode laser (103, 203) et configurée pour recevoir des données de source (105, 106, 107, 205, 206, 207) pour une pluralité de liaisons de communication (108, 109, 110, 208, 209, 210),
**caractérisé en ce que** l'unité de commande (104, 204) est configurée pour commander la diode laser (103, 203) afin de commuter cycliquement un mode (M1, M2, M3, M4, M5) qui se réfère à la lumière d'une longueur d'onde prédéterminée et de moduler dans chaque mode (M1, M2, M3, M4, M5) la lumière laser générée par la diode laser (103, 203) en fonction des données sources (105, 106, 107, 205, 206, 207) pour une liaison de communication (108, 109, 110, 208, 209, 210) qui correspond au mode respectif (M1, M2, M3, M4, M5) ;
et que
un démultiplexeur optique (112, 212) sur un côté récepteur (111, 211) est couplé à la fibre optique (101, 201) sur le côté récepteur (111, 211), dans lequel le démultiplexeur est configuré pour fournir une lumière entrante de différentes longueurs d'onde prédéterminées chacune à un récepteur respectif (116, 117, 118, 216, 217, 218),
le démultiplexeur optique (112, 212) comprend un port de sortie (113, 114, 115, 213, 214, 215) pour chaque mode (M1, M2, M3, M4, M5) utilisé par l'unité de commande (104, 204) pour transmettre les données sources (105, 106, 107, 205, 206, 207).

2. Système de communication optique (100, 200) selon la revendication 1, dans lequel l'unité de commande (104, 204) comprend un tampon de données (221) configuré pour mettre en mémoire tampon les données sources entrantes (105, 106, 107, 205, 206, 207) pour les liaisons de communication (108, 109, 110, 208, 209, 210).

3. Système de communication optique (100, 200) selon l'une quelconque des revendications précédentes, dans lequel l'unité de commande (104, 204) comprend une source de courant configurable (223) et une minuterie (222), l'unité de commande (104, 204) étant configurée pour reconfigurer cycliquement, sur la base d'une sortie de la minuterie (222), la source de courant afin de délivrer un courant continu qui sélectionne un mode respectif (M1, M2, M3, M4, M5) dans la diode laser (103, 203).

4. Système de communication optique (100, 200) selon les revendications 2 et 3, dans lequel l'unité de commande (104, 204) est configurée pour récupérer les données source (105, 106, 107, 205, 206, 207) du tampon de données (221) qui correspondent à un mode (M1, M2, M3, M4, M5) momentanément sélectionné de la diode laser (103, 203) et pour moduler un signal de commande de la diode laser (103, 203) en fonction des données source récupérées (105, 106, 107, 205, 206, 207).

5. Système de communication optique (100, 200) selon l'une quelconque des revendications précédentes 2 à 4, dans lequel l'unité de commande (104, 204) est configurée pour analyser pour chaque lien de communication (108, 109, 110, 208, 209, 210) la quantité de données sources (105, 106, 107, 205, 206, 207) dans le tampon de données (221) et pour hiérarchiser les liens de communication (108, 109, 110, 208, 209, 210) en fonction de la quantité de données sources (105, 106, 107, 205, 206, 207) dans le tampon de données (221).

6. Méthode de communication optique pour communiquer des données d'un côté émetteur (102, 202) à un côté récepteur (111, 211) via une fibre optique (101, 201), la méthode de communication optique comprenant :
la réception (S1) du côté émetteur (102, 202) de données sources (105, 106, 107, 205, 206, 207) pour une pluralité de liaisons de communication (108, 109, 110, 208, 209, 210),
commander (S2) du côté de l'émetteur (102, 202) une diode laser (103, 203) pour commuter cycliquement un mode (M1, M2, M3, M4, M5) qui se réfère à la lumière d'une longueur d'onde prédéterminée de la diode laser (103, 203),
**caractérisé par**
modulant (S3) du côté émetteur (102, 202) dans chaque mode (M1, M2, M3, M4, M5) la lumière laser générée par la diode laser (103, 203) sur la base des données de source (105, 106, 107, 205, 206, 207) pour l'une des liaisons de communication (108, 109, 110, 208, 209, 210) qui correspond au mode respectif (M1, M2, M3, M4, M5) ;
et
du côté du récepteur (111, 211), démultiplexer la lumière entrante de différentes longueurs d'onde prédéterminées et fournir la lumière entrante de différentes longueurs d'onde prédéterminées à un récepteur respectif (116, 117, 118, 216, 217, 218), la lumière de différentes longueurs d'onde prédéterminées étant fournie à chacun des récepteurs (116, 117, 118, 216, 217, 218) par l'intermédiaire d'un port de sortie respectif (113, 114, 115, 213, 214, 215) d'un démultiplexeur optique (112, 212).

7. Méthode de communication optique selon la revendication 6, comprenant du côté de l'émetteur (102, 202) la mise en mémoire tampon des données sources entrantes (105, 106, 107, 205, 206, 207) pour les liaisons de communication (108, 109, 110, 208, 209, 210) dans un tampon de données (221).

8. Méthode de communication optique selon l'une quelconque des revendications précédentes 6 et 7, comprenant du côté émetteur (102, 202) la reconfiguration cyclique sur la base d'une sortie d'un temporisateur (222) d'une source de courant pour la diode laser (103, 203) afin de délivrer un courant continu qui sélectionne un mode respectif (M1, M2, M3, M4, M5) dans la diode laser (103, 203).

9. Méthode de communication optique selon les revendications 7 et 8, comprenant du côté émetteur (102, 202) la récupération des données source (105, 106, 107, 205, 206, 207) du tampon de données (221) qui correspond à un mode momentanément sélectionné (M1, M2, M3, M4, M5) de la diode laser (103, 203) et la modulation d'un signal de commande pour la diode laser (103, 203) en fonction des données source récupérées (105, 106, 107, 205, 206, 207).

10. Méthode de communication optique selon l'une quelconque des revendications précédentes 7 à 9, comprenant l'analyse pour chaque lien de communication (108, 109, 110, 208, 209, 210) de la quantité de données sources (105, 106, 107, 205, 206, 207) dans le tampon de données (221) et la priorisation des liens de communication (108, 109, 110, 208, 209, 210) en fonction de la quantité de données sources (105, 106, 107, 205, 206, 207) dans le tampon de données (221).
